# EUROPÄISCHE PATENTSCHRIFT

(11) **EP 4 043 080 B1**
(45) Veröffentlichungstag und Bekanntmachung des Hinweises auf die Patenterteilung: **06.08.2025**
(21) Anmeldenummer: 22159926.9
(22) Anmeldetag: 08.10.2013
(51) Int. Cl.: A62C 2/06, F16L 5/04, H02G 3/04

(54) **BRANDSCHUTZMANSCHETTE**
FLAME RETARDANT SLEEVE
COLLIER DE PROTECTION CONTRE L'INCENDIE

(30) Priorität: 11.10.2012 DE 102012218540
(43) Veröffentlichungstag der Anmeldung: 17.08.2022
(62) Teilanmeldung aus: 13773765.6
(73) Patentinhaber: Hilti Aktiengesellschaft, 9494 Schaan (LI)
(72) Erfinder: Klein, Manfred, 86916 Kaufering (DE); Mordau, Ulf, 86807 Buchloe (DE)
(74) Vertreter: Hilti Aktiengesellschaft Corporate Intellectual Property

(56) Entgegenhaltungen:
- EP-A1- 1 635 100
- GB-A- 2 186 443
- JP-A- 2008 095 735
- US-A- 4 061 344

## Beschreibung

Die Erfindung betrifft eine an einer Wand oder Decke montierbare Brandschutzmanschette zum Abschotten von durch Wände oder Decken hindurchführenden Leitungen mit einer intumeszierenden Brandschutz-Einlage, einem die Brandschutz-Einlage umgebenden Wandungsteil, an dessen Innenseite die Brandschutz-Einlage angeordnet ist, und wenigstens einem, im Bereich wenigstens einer Stirnseite des Wandungsteils radial nach außen abragendem Befestigungsteil.

Solche Brandschutzmanschetten sind in den verschiedensten Ausgestaltungen bekannt. Sie dienen dazu, im Brandfall Durchbrüche durch Wände, Decken oder Böden von Gebäuden zu verschließen, durch die brennbare oder schmelzende Rohre hindurchgeführt sind. Zu diesem Zweck wird die Brandschutzmanschette um die Rohre herum angeordnet, so dass bei einem Brand die sich dann ausdehnende Brandschutz-Einlage den Durchbruch möglichst dicht verschließt. Dabei ist die Brandschutzmanschette üblicherweise auf der Außenseite der Öffnung angeordnet, also beispielsweise an der Wand, durch die sich der Durchbruch hindurch erstreckt. Als Mantel für den Streifen aus Intumeszenzmaterial wird üblicherweise Blech verwendet. Mit einem solchen Mantel kann der im Brandfall erzeugte Blähdruck der Brandschutz-Einlage gut abgestützt werden, so dass gewährleistet ist, dass die Brandschutz-Einlage gerichtet dorthin expandiert, wo die

Öffnung verschlossen werden soll. Bekannte Brandschutz-Einlage Konstruktionen sind z.B. in der JP 2008 095735 A und EP 1 635 100 A1 offenbart. Nachteilig bei den bekannten Konstruktionen ist, dass die Brandschutz-Einlage als wenige Millimeter dünner Streifen ausgebildet ist, der den vom Mantel aufspannenden Raum nicht vollständig ausfüllt, so dass bei gegebenem Manschettenumfang keine Flexibilität hinsichtlich des Umfangs der zu umschließenden Rohrleitungen gegeben ist. So ist ein bestimmter Manschettentyp nur für einen bestimmten Rohrdurchmesser geeignet und es kann, wenn der Durchmesser des zu umschließenden Rohres kleiner ist, als dies durch die Manschette vorgegeben ist, der Ringspalt zwischen dem Rohr und dem Durchbruch nicht rauchgasdicht abgeschlossen werden.

Insbesondere wäre bei der Verwendung der bekannten Brandschutzmanschetten für Leitungen, Kabel und dergleichen eine Nachbelegung mit weiteren Leitungen oder Kabeln nur durch einen Austausch der bereits montierten Manschette durch eine mit einem größeren Umfang realisierbar. Auch wäre durch die Manschette selbst, die gewöhnlich aus einem Blechmantel besteht, der Umfang der abzuschottenden Leitung(en) und Kabel nach unten begrenzt, damit können nicht beliebig kleine Umfänge von der Manschette umschlossen werden. Daher werden diese Brandschutzmanschetten nicht zur Abschottung einzelner Leitungen oder Kabel mit relativ geringem Durchmesser verwendet. Da die Brandschutz-Einlage bei den bekannten Brandschutzmanschetten gewöhnlich wenig kompressibel sind, können Leitungsstränge, die etwa aus mehreren Kabeln bestehen, nicht rauchgasdicht abgeschottet werden, da die Zwickel zwischen den einzelnen Leitungen von der Brandschutz-Einlage nicht abgedichtet werden. Hierzu ist eine weiteren Maßnahme erforderlich, wie etwa die zusätzliche Abschottung der Bauteildurchführung beispielsweise mit einem Brandschutzschaum, einer Brandschutzmasse oder dergleichen.

Ferner ermöglichen die bekannten Brandschutzmanschetten bei sehr unstrukturierter Verlegung der Kabel keine Rauchgasdichtigkeit, da sie wenig flexibel sind und für die Abschottung von möglichst runden Rohren und Leitungssträngen bestimmter Durchmesser konzipiert sind.

In der Praxis werden Kabelstränge üblicherweise mit intumeszierenden Dichtstoffen, wie Brandschutzschäumen, Brandschutzmörteln oder anderen Dichtstoffen, abgeschottet, wobei der Spalt zwischen Kabelstrang und Bauteil mit den intumeszierenden Dichtstoffen gefüllt wird. Dabei ist nicht zuverlässig gewährleistet, dass die Einbauvorschriften entsprechend den Zulassungen der Brandschutzprodukte, wie maximale Kabelbelegung, Einbautiefe, maximaler Öffnungsquerschnitt und Wandabstände, eingehalten werden. Darüber hinaus ist das nachträgliche Abschotten von Kabeldurchführungen zeitaufwendig. Die Aufgabe der Erfindung besteht nun darin, eine Brandschutzmanschette zu schaffen, die flexibler eingesetzt und vor Ort mit geringem Aufwand an die jeweils benötigten Leitungs- oder Kabeldurchmesser angepasst werden kann.

Zur Lösung dieser Aufgabe ist erfindungsgemäß vorgesehen, dass die intumeszierende Brandschutz-Einlage als ein den vom Gehäuse umspannten Raum vollständig ausfüllender, nachgiebig verformbarer Formkörper ausgebildet ist, der zweiteilig ist und aus zwei Elementen gebildet ist, die zusammen den Formkörper ergeben, wobei die Oberflächen der Stoßflächen strukuriert sind. Der Formkörper kann dabei als Würfel, Quader, Prisma oder Zylinder ausgebildet sein. Bevorzugt ist der Formkörper als Zylinder ausgebildet, der durch zwei halbzylinderförmige Elemente gebildet wird. Dabei können die Grund- und die Deckfläche jegliche Formen annehmen, die von einer Manschette ummantelt werden können, insbesondere sind diese kreisförmig, elliptisch, mehreckig, etwa sechseckig.

*"Nachgiebig verformbar"* im Sinne der Erfindung bedeutet dabei, dass das Material, aus dem die Brandschutz-Einlage besteht, so elastisch ist, dass ein Zusammendrücken problemlos, d.h. ohne großen Kraftaufwand, etwa mit einer Hand, möglich ist und die Brandschutz-Einlage wieder ihre ursprüngliche Form annehmen kann. Hierdurch wird gewährleistet, dass die Leitungen oder Kabel bündig umfasst und damit gegen Rauchgase abgedichtet werden. Insbesondere bei Kabelbündeln ist dies von Vorteil, da sich das Material der Brandschutz-Einlage in die Zwickel zwischen den äußeren nebeneinanderliegenden Kabeln drückt und diese ebenfalls abdichtet.

Durch die zwei geteilte Form wird eine nachträgliche Installation der Brandschutzmanschette um bereits durch Bauteilöffnungen geführte Leitungen oder Rohre sehr vereinfacht. Wird der Formkörper etwas größer als der von dem Wandungsteil umspannte Raum gewählt, so werden die beiden Halbkörper gegeneinander verpresst, so dass eine zufriedenstellende Kaltrauchgasdichtigkeit im montierten Zustand erreicht werden kann.

Allerdings hat sich herausgestellt, dass durch die plane Stoßfläche, also die Fläche, mit der die beiden Halbkörper, insbesondere Halbzylinder im montierten Zustand aneinander liegen, im Brandfall die Dichtigkeit gegenüber heißer Luft und heißen Gasen nicht ausreichend ist, da trotz des Verpressens der beiden Halbkörper, insbesondere Halbzylinder Hitze in die Spalt zwischen den Hablkörpern eindringen und zu einer frühen kaltseitigen, d.h. der dem Feuer abgewandten Seite der Manschette, Erwärmung führen kann.

Insbesondere bei größeren Durchmessern der Brandschutzmanschette ist der Spalt ferner eine Schwachstelle bei dem in den USA vorgeschriebenen Wasserstrahltest, bei dem nach dem Brandtest ein Wasserstrahl mit hohem Druck auf ein Brandschott gerichtet wird, wobei kein Wasser durch das Brandschott dringen darf. Sollte der nach dem Brandtest durch den auf der Brandseite gebildete Ascheblock dem hohen Druck des Wasserstrahls nicht standhalten oder vollständig abgebrannt sein, kann sich der auf der Kaltseite, d.h. der feuerabgewandten Seite des Schotts, auf der im Allgemeinen die Manschette noch intakt ist und das intumeszierende Material noch nicht aktiviert wurde, vorhandene Spalt öffnen und Wasser auf die Kaltseite durchtreten.

Zur Erhöhung der Dichtigkeit des Spalts sind daher gemäß der Erfindung die Oberflächen der Stoßfläche der zweiteiligen, insbesondere halbzylinderförmigen Elemente strukturiert, d.h. die Oberfläche ist mit Erhebungen und Vertiefungen versehen.

Durch die strukturierte Oberflächen der Halbzylinder dichtet die Brandschutzeinlage ferner beim Anpressen die hindurchgeführte Leitung oder das Rohr ausreichend ab, ohne dass die Kontur der Leitung vorher aus dem Brandschutzelement herausgeschnitten werden muss. Die elastische und deformierbare Eigenschaft des Materials ermöglicht, dass die an der Leitung anliegenden Erhebungen entweder zusammengedrückt, wodurch sich die zusammengedrückten Erhebungen verbreitern, oder seitlich weggedrückt werden. Ferner wird an den Stellen, an denen die Oberflächen der Halbzylinder ineinandergreifen eine Verzahnung der Oberflächen erreicht. Dadurch wird erreicht, dass der Formkörper dem hohen Druck des Wasserstrahls im Wasserstrahltest stand hält.

Ein weiterer Vorteil der strukturierten Oberflächen ist, dass Leitungen einfach, ohne zu großen Widerstand im Fall einer Nachbelegung eingeschoben werden können. Die Nachgiebigkeit sowie die Elastizität des Materials ermöglichen, dass beim nachträglichen Einführen einer Leitung oder eines Rohres die Erhebungen der Leitung ausweichen können, so dass die Einführung ohne großen Widerstand und ohne große Beschädigung des Brandschutzelements erfolgen kann. Für den Fall, dass beim Einführen der Leitung ein paar Erhebungen abgerissen werden, behindert dies nicht die Dichtungseigenschaften des Brandschutzelements, da die übrigen intakten Erhebungen eine hinreichende Rauchgas- und Feuerdichtigkeit sicherstellen. Darüber hinaus ermöglichen die übrigen Erhebungen ein Hängenbleiben der abgerissenen Erhebungen, was wiederum zu einer Abdichtung führt. An den Stellen, an denen die Erhebungen abgerissen wurden, ergeben sich im Allgemeinen ebene Bereiche. Die Elastizität des Materials führt nun dazu, dass sich die ebenen Bereiche in ihrer Form der Leitung oder dem Leitungsbündel anpassen können, so dass weiterhin eine Rauchgasdichtigkeit gewährleistet ist.

Zweckmäßig werden die strukturierten Oberflächen der Stoßflächen der Halbkörper, insbesondere der Halbzylinder durch regelmäßig oder unregelmäßig angeordnete hervorstehende Elemente gebildet, wobei eine regelmäßige Anordnung bevorzugt ist. Besonders bevorzugt sind die hervorstehenden Elemente entlang von gedachten Linien auf der Grundfläche periodisch angeordnet. Es hat sich als vorteilhaft erwiesen, wenn die hervorstehenden Elemente entlang von gedachten Linien parallel zu der nach außen weisenden Oberfläche des Formkörpers verlaufen, wobei es besonders vorteilhaft ist, wenn bezogen auf die Dicke, bzw. die Höhe des Formkörpers drei bis vier Reihen an hervorstehenden Elementen vorgesehen sind.

Gemäß einer bevorzugten Ausführungsform der Erfindung weisen die hervorstehenden Elemente selbst unterschiedliche oder gleiche Geometrien und/oder Ausmaße auf. Hierdurch wird sichergestellt, dass mehrere Leitungen unterschiedlicher Größe ohne zusätzlichen Aufwand etwa durch Ausschneiden der Brandschutz-Einlage nebeneinander verlegt werden können, ohne die Brandschutzfunktion der Abschottung zu beeinträchtigen.

Zweckmäßig hinsichtlich einer einfacheren Herstellung sind die ausgebildeten Erhebungen und Vertiefungen zueinander komplementär. Bevorzugt sind bei einem Brandschutzelement aus zwei Formkörpern, bei denen die strukturierten Oberflächen einander zugewandt sind, die strukturierten Oberflächen zueinander komplementär, d.h. die Erhebungen und die Vertiefungen greifen ineinander, wobei kleine Lücken verbleiben können. Damit wird eine besonders gute Abdichtung gegen den Durchtritt von Rauchgasen erreicht, selbst wenn die strukturierten Oberflächen nicht 100%-ig komplementär sind.

Die Form der Erhebungen und Vertiefungen der strukturierten Oberfläche des Formkörpers ist nicht beschränkt. Bevorzugt sind die hervorstehenden Elemente pyramiden-, kegel-, halbkugel- oder noppenförmig.

Herstellungsbedingt können die Erhebungen durch Stege miteinander verbunden sein. Dies kann, abhängig von der geplanten Verwendung der erfindungsgemäßen Brandschutzelemente, zur Stabilität beitragen, wie beispielsweise bei Verwendung als Brandschutzmauersteine oder als Matte. Insbesondere entspricht die Höhe der Stege maximal der halben Höhe der Erhebungen, so dass ein Ineinandergreifen zweier Brandschutzelemente, die so angeordnet sind, dass die strukturierten Oberflächen einander zugewandt sind, erleichtert wird.

Bevorzugt, insbesondere für die Verwendung der erfindungsgemäßen Brandschutzelemente als Umwickelung, ist jedoch ein Brandschutzelement, dessen Erhebungen nicht durch Stege verbunden sind. Dies hat einen direkten Einfluss auf die Flexibilität des Brandschutzelementes, wobei die Brandschutzelemente ohne die Stege deutlich flexibler sind.

Alternativ kann die strukturierte Oberfläche durch Erhebungen und Vertiefungen in Form von Rillen gebildet werden. Die strukturierte Oberfläche ist dabei in einer Richtung senkrecht zur entsprechenden Ebene des Brandschutzelements insbesondere wellen-, trapez- oder keilförmig. Dies bedeutet, dass die Erhebungen und die Vertiefungen zusammen die jeweilige Form ergeben. Im Folgenden wird hierfür der Ausdruck "Form der Rillen/Erhebungen" verwendet. In einer Richtung parallel zur entsprechenden Ebene des Brandschutzelements können die Rillen insbesondere geradlinig, wellen-, trapez- oder keilförmig verlaufen. Im Folgenden wird hierfür der Ausdruck "Verlauf der Rillen/Erhebungen" verwendet. Es sei darauf hingewiesen, dass die strukturierte Oberfläche nicht auf die hier beschriebenen Formen und Verläufe beschränkt ist, sondern jegliche andere Form und anderen Verlauf annehmen kann. Der Verlauf der Rillen bzw. Erhebungen relativ zu einer Seitenkante des Brandschutzelements ist ebenfalls nicht beschränkt. Sie können parallel zu einer Seitenkante aber auch in jedem Winkel zu der Seitenkante, d.h. schräg, verlaufen, wobei die Rillen bzw. die Erhebungen jeweils parallel zueinander angeordnet sind. Die Erhebungen können dabei alternierend oder unregelmäßig gleich oder unterschiedlich hoch sein.

Der Formkörper besteht bevorzugt aus einem schäumbaren Bindemittel, das wenigstens ein aschebildendes und gegebenenfalls intumeszierendes Stoffgemisch enthält. Das Bindemittel dient dabei als verbundbildender Träger für das aschebildende und gegebenenfalls intumeszierende Stoffgemisch. Bevorzugt ist das Stoffgemisch homogen in dem Bindemittel verteilt. Der verbundbildende Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat. Zusätzlich oder alternativ kann statt des eben beschriebenen intumeszierenden Materials im Brandfall physikalisch aufschäumende Verbindungen, wie Blähgraphit, verwendet werden.

Der verbundbildende Träger kann femer als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen Brandschutz-Einlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Die Herstellung des Formkörpers erfolgt durch Formschäumen, wie Reaktionsschäumen (RIM), entsprechend der DE 3917518, z.B. mit Fomox^{®}-Brandschutzschaum oder der Dämmschicht bildende Baustoff HILTI CP 65GN, oder durch Schneiden. Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Aufgrund der Konsistenz dieses Schaumstoffs ist es möglich, Wanddurchbrüche unmittelbar nach Herstellung der Wände feuer- und rauchgasdicht zu verschließen und erst während der Installation in den Formkörper der Brandschutz-Einlage einen oder mehrere Durchgangsöffnungen einzuschneiden, deren Durchmesser an die der hindurchzuführenden Leitungen und Kabel genau angepasst ist. Die Nachgiebigkeit des Formkörper-Materials ermöglicht auch die genau bündige Lage des Formkörpers an die Leitungen oder Kabel, und kann die Zwickel zwischen Leitungs- oder Kabelbündeln abdichten. Ferner kann der Formkörper zur Abschottung von bereits verlegten Leitungen und Kabeln einfach eingeschnitten werden, ohne dass dessen Rauchgasdichtigkeit beeinträchtigt wird.

Die Form der Manschette, insbesondere die Form des Wandungsteils ist an die Form des Formkörpers angepasst und ist bevorzugt zylinderförmig. Die Höhe des Formkörpers ist dabei wiederum an die Breite des Wandungsteils der Brandschutzmanschette angepasst und entspricht zweckmäßig dieser Breite. Der Umfang der Manschette entspricht dabei etwa dem Außenumfang des durch den Formkörper definierten Körpers, wobei er geringfügig kleiner sein kann, um einen festen Halt der Brandschutz-Einlage in der Brandschutzmanschette zu gewährleisten.

In einer bevorzugten Ausführungsform der Erfindung ist der Formkörper der Brandschutz-Einlage so dimensioniert, dass die Höhe des Formkörpers größer ist als die Breite des Wandungsteils der Brandschutzmanschette, so dass der Formkörper über das Wandungsteil hinaussteht. Zweckmäßig steht dabei der Formkörper nur auf der der Wand oder Decke zugewandten Seite über das Wandungsteil hinaus. Bevorzugt sind dabei an dem Wandungsteil nur an der Umfangslinie (Außenkante) des Wandungsteils Laschen vorgesehen, welche der Wand oder der Decke gegenüberliegend ist. Damit wird die Brandschutz-Einlage vor dem Herausziehen oder Herausrutschen gesichert. In montierten Zustand wird durch die Laschen zum einen gewährleistet, dass im Brandfall die Intumeszenz der Brandschutz-Einlage in Richtung der Bauteilöffnung gerichtet wird, und zum anderen, dass die Brandschutz-Einlage effektiv an die Wand oder Decke gedrückt werden kann.

In einer alternativen Ausführungsform weist der Formkörper an der der Wand oder Decke zugewandten Grundfläche einen rechtwinklig zum Formkörper verlaufenden Flansch auf. Alternativ kann der Flansch durch eine in Umfangsrichtung des Formkörpers verlaufende Einkerbung gebildet sein, so dass der Umfang des Flansches wenigstens dem Umfang des Formkörpers entspricht. Zweckmäßig ist der Flansch so angeordnet, dass er das äußerste Teil der Wand oder Decke zugewandten Seite der Brandschutzmanschette bildet. Hierdurch kann ein rauchgasdichter Anschluss der Brandschutzmanschette an der Mauerdurchführung erreicht werden, in dem der Flansch als Dichtung fungiert. Daher ist keine zusätzliche Abdichtung des zwischen der Wand oder Decke und dem Kabelstrang verbliebenen Spaltes mit Dichtmasse mehr notwendig. Dies hat den Vorteil, dass der Umfang der Manschette lediglich an die Größe des Wand- oder Deckendurchbruchs angepasst werden muss, wobei der Anwender bei der Belegung des Durchbruchs weitestgehend flexibel ist. Auch bei unvollständiger Belegung des Durchbruchs mit Leitungen oder Kabeln, muss der verbleibende, offene Spalt nicht mit einem zusätzlichen Brandschutzmaterial, wie etwa ein Schaum und dergleichen, abgedichtet werden, da über den Flansch und das Formkörpermaterial eine ausreichende Rauchgasdichtigkeit gegeben ist.

Bei beiden Ausführungsformen entspricht der Umfang des Flansches bevorzugt mindestens dem Außenumfang des Wandungsteils. Hierdurch wird eine bessere Rauchgasdichtigkeit erreicht, da der Flansch über das Wandungsteil an die Wand oder Decke gepresst wird.

Der Flansch darf dabei nicht so dick sein, dass der Abstand zwischen der Manschette, also dem Wandungsteil und dem Befestigungsteil, und der Wand oder Decke so groß wird, dass keine sichere Montage der Brandschutzmanschette mehr möglich ist. Sie ist daher so zu wählen, dass die Brandschutzmanschette die Bauteilöffnung abdichtet und problemlos an der Wand oder Decke montiert werden kann.

Ein weiterer Vorteil des Flansches liegt darin, dass intumeszierendes Material direkt auf der Wand oder Decke zum Liegen kommt und somit die Intumeszenz im Brandfall auch in Richtung der Wand- oder Deckendurchführung und nicht nur radial nach innen in Richtung der Leitung oder der Kabel gerichtet wird, was eine zusätzliche Dichtigkeit bewirkt.

Das Wandungsteil kann der Blechmantel einer herkömmlichen Brandschutzmanschette sein. Alternativ kann das Wandungsteil durch ein flexibles Gewebe oder ähnliches gebildet werden, welche im Brandfalle ausreichend formstabil sind, damit der durch die aufquellende Brandschutz-Einlage erzeugte Intumeszenzdruck in radialer Richtung nach innen zur Wand- oder Deckendurchführung gerichtet werden kann.

Um die Ausdehnung der Brandschutz-Einlage im Brandfall in axialer Richtung weg von der Leitungsdurchführung möglichst zu begrenzen und die Intumeszenz radial nach innen in Richtung der Leitungen oder Kabel zu lenken, sind gemäß einer Ausführungsform der Erfindung entlang wenigstens einer Umfangslinie am Umfang des Wandungsteils, das aus einem herkömmlichen Blechmantel besteht, mehrere radial nach innen abragende Laschen angeordnet und zwar insbesondere wenigstens entlang der Umfangslinie am Umfang des Wandungsteils, welche der Wand- oder Deckenseite entgegengesetzt ist. Hierdurch wird außerdem ein Herausrutschen des Formkörpers verhindert, wenn über die durchgeführte Leitung oder das durchgeführte Kabel Zug auf den Formkörper ausgeübt wird.

In einer bevorzugten Ausführungsform sind die Laschen sowohl an der Umfangslinie des Wandungsteils, welche der Wand oder Decke zugewandt ist, als auch an der Umfangslinie des Wandungsteils, welche der Wand oder Decke abgewandt ist, angeordnet. Von Vorteil ist insbesondere, wenn die mehreren radial nach innen ragenden Laschen an der Umfangslinie, welche der Wand oder Decke zugewandt ist, von dem Flansch der Brandschutz-Einlage umfasst werden. Besonders vorteilhaft wirken der durch die Einkerbung gebildete Flansch und die Laschen zusammen, wenn die Laschen in die den Flansch bildende Einkerbung des Formkörpers eingreifen. Hierdurch sitzt der Formkörper sehr fest in der Manschette und es kann ein zusätzlicher Druck auf den Flansch ausgeübt werden. Darüber hinaus wird durch das Umfassen der Laschen durch den Formkörper verhindert, dass der Flansch umgebogen wird und so nicht richtig an der Wand oder Decke zum Anliegen kommt.

Zur Montage der erfindungsgemäßen Brandschutzmanschette wird zunächst das Wandungsteil entsprechend der Größe der Brandschutz-Einlage abgelängt bzw. gewählt und um die Brandschutz-Einlage gelegt. Die Größe der Brandschutz-Einlage ist mindestens so groß zu wählen, dass der Querschnitt der abzuschottenden Leitungen oder Kabel hinreichend von der Grundfläche der Brandschutz-Einlage abgedeckt wird. Eine Überdimensionierung, d.h. ein größerer Umfang der Brandschutzeinlage ist dabei unkritisch und dann von Vorteil, wenn beabsichtigt ist, das Schott durch nachträgliches Durchführen weiterer Leitungen und/oder Kabel zu erweitern, da dann keine neue Brandschutzmanschette montiert werden muss sondern die bestehende in einfacher Weise angepasst werden kann. Dann wird, bei Montage der Brandschutzmanschette nach der Belegung der Wand- oder Deckendurchführung mit Leitungen oder Kabeln, die Brandschutzeinlage eingeschnitten und gerade so viel Material der Brandschutzeinlage, vorzugsweise aus dem mittleren Bereich, herausgeschnitten, dass sich die Brandschutz-Einlage beim Anlegen der Manschette um die Leitungen oder Kabel mit einem leichten Druck an die Leitungen oder Kabel anpressen lassen. Hierdurch wird die Rauchgasdichtigkeit sichergestellt. Die so hergerichtete Brandschutzmanschette wird über übliche Befestigungsteile, etwa Haken, die in das Wandungsteil eingreifen können und eine Öffnung für das Befestigungsmittel, wie eine Schraube, aufweisen, so an der Wand oder Decke montiert, dass die Brandschutzeinlage an die Oberfläche der Wand oder Decke gepresst wird und alle Spalte abdichtet.

Die Erfindung wird anhand von bevorzugten Ausführungsbeispielen näher beschrieben. Es zeigen:
- FIG. 1: eine schematische Ansicht der Brandschutz-Einlage gemäß einer ersten Ausführungsform der Erfindung;
- FIG. 2: eine schematische Ansicht der Brandschutz-Einlage gemäß einer weiteren Ausführungsform der Erfindung;
- FIG. 3: eine schematische Ansicht (Draufsicht) einer erfindungsgemäßen Brandschutzmanschette mit der Brandschutzeinlage aus FIG. 2;
- FIG. 4: eine schematische Ansicht (von unten) der Brandschutzmanschette aus FIG. 3;
- FIG. 5: eine schematische Ansicht einer aufgeklappten Brandschutzmanschette.

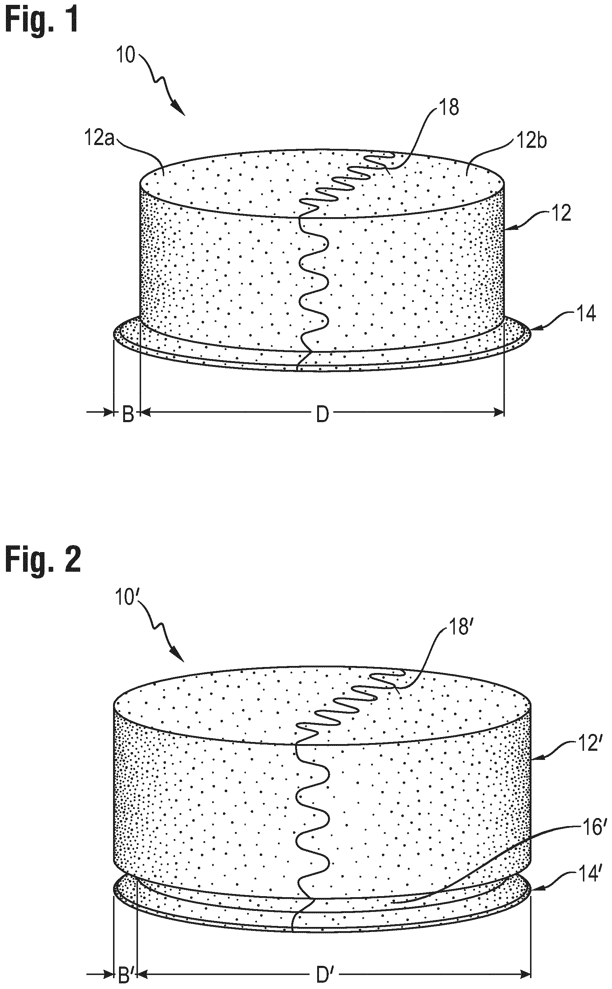

FIG. 1 zeigt eine schematische Ansicht einer Brandschutz-Einlage 10 gemäß einer ersten Ausführungsform der Erfindung. Die Brandschutz-Einlage 10 besteht aus einem Formkörper 12, der zweiteilig ausgebildet ist, aus als zwei Halbzylindern 12a und 12b besteht und einen Flansch 14 aufweist, der um die Breite B über den Durchmesser D der Halbzylinder hinausragt, wobei der Flansch ebenfalls zweiteilig als halbkreisförmige Segmente 14a, 14b, die den entsprechenden Halbzylindern zugeordnet sind, ausgebildet ist. Dieser Flansch 14 ragt radial nach außen ab und bildet den Teil der Brandschutzmanschette, der mit seiner Flachseite direkt an der Wand oder Decke anliegt. Die Oberflächen der Stoßfläche 18 der in dieser Ausführungsform gezeigten Halbzylinder sind dergestalt, dass bei beide Oberflächen mit Noppen (nicht ersichtlich) versehen sind, wobei diese komplementär zueinander sind, so dass die Noppen der einen Oberfläche in die Vertiefungen zwischen den Noppen der anderen Oberfläche eingreifen.

Die Brandschutz-Einlage 10 besteht in dem gezeigten Beispiel aus geschäumten Polyurethan mit darin homogen verteilten Brandschutzadditiven und ist zweiteilig ausgebildet, wobei die Halbzylinder 12a, 12b jeweils einstückig ausgebildet sind, d.h. der Halbzylinder 12a und 12b und der jeweilige Flanschbereich 14a und 14b sind in einem Stück durch Reaktionsschäumen (RIM) hergestellt.

FIG. 2 zeigt eine schematische Ansicht einer Brandschutzeinlage 10' gemäß einer zweiten Ausführungsform der Erfindung. Die Brandschutz-Einlage 10' besteht bei dieser Ausführungsform aus einem Formkörper 12', der ebenfalls zweiteilig als zwei Halbzylinder 12'a und 12'b ausgebildet ist und einen Flansch 14' aufweist, dessen Breite B' dem Durchmesser D' der Halbzylinder entspricht. Die Flanschteile 14'a und 14'b werden dabei durch eine im Umfangsrichtung entlang der Mantelfläche der Halbzylinder 12'a, 12'b verlaufende Einkerbungen 16' gebildet.

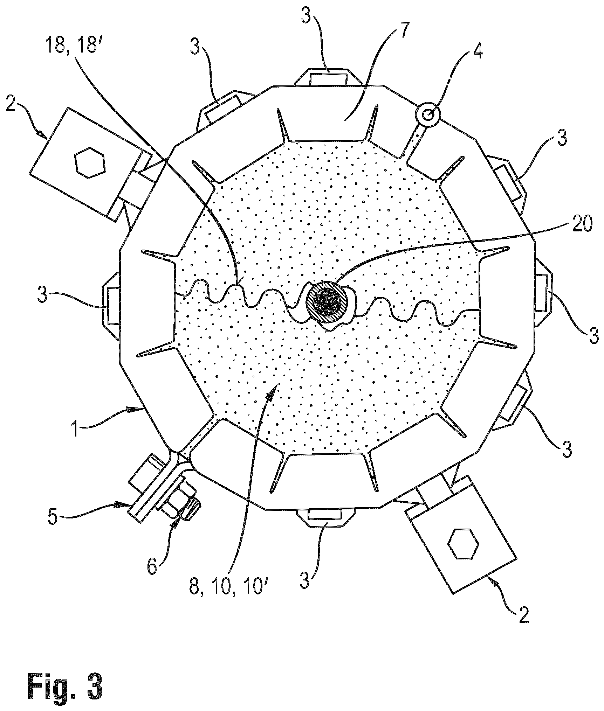

Die in FIG. 3 in Draufsicht dargestellte Brandschutzmanschette weist ein Wandungsteil 1 mit zwei halbschalenartig ausgebildeten Elementen auf, die über eine gemeinsame Schwenkachse 4 gegeneinander schwenkbar sind. Die Endbereiche des Wandungsteiles 1, die der Schwenkachse 4 gegenüberliegen, sind gebildet von einem radial abragenden Verschluss 5, der dem Verspannen des Wandungsteiles 1 dient. Die Verspannung erfolgt mittels wenigstens einer Klemmschraube 6.

Das Wandungsteil 1 besteht aus einem Blechprofil an dem mehrere radial nach innen abragende Laschen 7 entlang wenigstens einer Umfangslinie am Umfang des Wandungsteils 1 angeordnet sind, um eine im Wesentlichen kreisrunde Form zu bilden. An den Stirnseiten des Wandungsteils 1 erstrecken sich zwei radial nach außen abragende Befestigungsteile 2. Die Laschen 7 gestatten die Aufnahme und die Führung einer Einlage 10, 10' mit brandhemmenden Eigenschaften.

Das Wandungsteil 1 besitzt am Umfang mehrere gleichmäßig verteilt angeordnete, im Wesentlichen radial abstehende Laschen 3, die in Verbindung mit wenigstens einem Befestigungsteil 2 der Festlegung der Rohrmanschette an der Oberfläche der Wand oder Decke dienen. Die dargestellte Rohrmanschette umschließt einen Leitungsstrang 20, der der durch einen Öffnung in einem Bauteil verlegt ist.

Alternativ (nicht dargestellt) kann die Manschette aus einem abgelängten Stück eines Endlosbandes bestehen. Allgemein kann die Manschette jede bekannte und für die bestimmten Zwecke verwendbare Manschette sein.

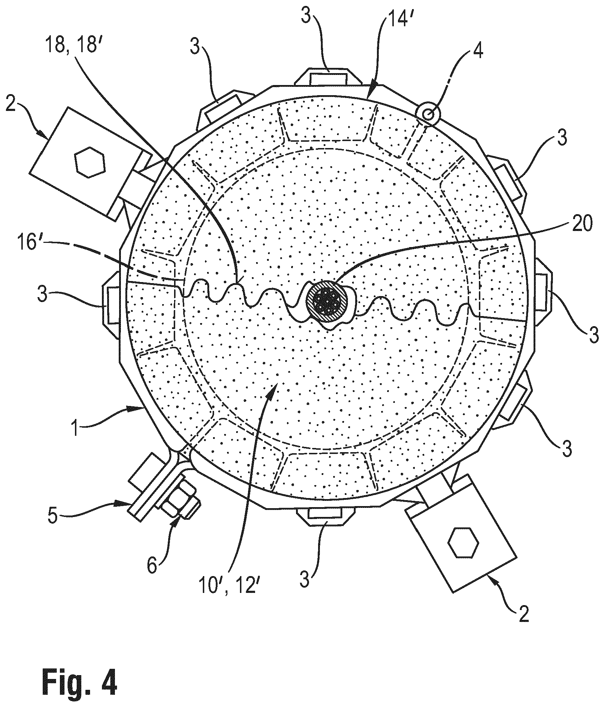

In FIG. 4 ist die in FIG. 3 dargestellte Brandschutzmanschette von unten gezeigt. Hieraus wird ersichtlich, dass der Flansch 14' des Formkörpers 12' der Brandschutz-Einlage 10' über den Laschen liegt. Die Laschen greifen in die den Flansch 14' bildende Einkerbung 16' des Formkörpers 12' ein.

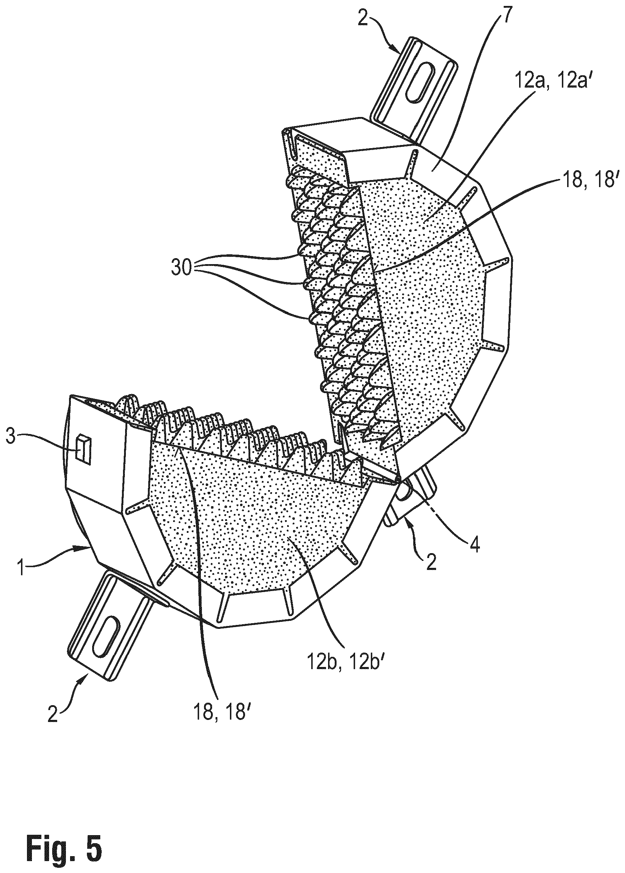

FIG. 5 zeigt die strukturierte Oberfläche der Stoßfläche 18, 18' der beiden Halbzylinder 12a, 12'a und 12b, 12'b, aus denen der Formkörper 10, 10' besteht. Die strukturierte Oberfläche wird in der gezeigten Abbildung durch regelmäßig angeordnete Erhebungen in Form von Noppen 30 gebildet.

## Patentansprüche

1. Brandschutzmanschette mit einer intumeszierenden Brandschutz-Einlage (10, 10'), die als ein den vom Wandungsteil (1) umspannten Raum (8) vollständig ausfüllender, nachgiebig verformbarer Formkörper (12, 12') ausgebildet ist, einem die Brandschutz-Einlage (10, 10') umgebenden Wandungsteil (1), an dessen Innenseite die Brandschutz-Einlage (10, 10') angeordnet ist, und wenigstens einem, im Bereich wenigstens einer Stirnseite des Wandungsteils (1) radial nach außen abragendem Befestigungsteil (2), wobei der Formkörper (12, 12') zweiteilig ausgebildet ist, **dadurch gekennzeichnet, dass** die beiden Oberflächen der Stoßflächen (18, 18') der zweiteiligen Elemente (12a, 12b, 12'a, 12'b) strukturiert sind.

2. Brandschutzmanschette nach Anspruch 1, **dadurch gekennzeichnet, dass** der zweiteilige Formkörper (12, 12') als Würfel, Quader, Prisma oder Zylinder ausgebildet ist.

3. Brandschutzmanschette nach Anspruch 2, **dadurch gekennzeichnet, dass** der Formkörper (12, 12') als Zylinder ausgebildet ist und durch zwei halbzylinderförmige Elemente (12a, 12b, 12'a, 12'b) gebildet ist.

4. Brandschutzmanschette nach einem der vorhergehenden Ansprüche, **dadurch gekennzeichnet, dass** die strukturierten Oberflächen durch regelmäßig oder unregelmäßig angeordnete, hervorstehende Elemente (30) gebildet ist.

5. Brandschutzmanschette nach Anspruch 4, **dadurch gekennzeichnet, dass** die hervorstehenden Elemente (30) selbst unterschiedliche oder gleiche Geometrien und/oder Ausmaße aufweisen.

6. Brandschutzmanschette nach Anspruch 5, **dadurch gekennzeichnet, dass** die hervorstehenden Elemente (30) pyramiden-, kegel-, halbkugel- oder noppenförmig sind.

7. Brandschutzmanschette nach einem der Ansprüche 4 bis 6, **dadurch gekennzeichnet, dass** die hervorstehenden Elemente (30) gleich oder unterschiedlich hoch sind.

8. Brandschutzmanschette nach Anspruch 7, **dadurch gekennzeichnet, dass** die Höhe der hervorstehenden Elemente (30) alternierend oder unregelmäßig unterschiedlich sind.

9. Brandschutzmanschette nach Anspruch 8, **dadurch gekennzeichnet, dass** die hervorstehenden Elemente (30) zwischen 5 mm und 50 mm hoch sind.

10. Brandschutzmanschette nach einem der vorhergehenden Ansprüche, **dadurch gekennzeichnet, dass** die strukturierten Oberflächen der Stoßflächen (18, 18') der zweiteiligen Elemente (12a, 12b, 12'a, 12'b) zueinander komplementär sind.

11. Brandschutzmanschette nach einem der vorhergehenden Ansprüche, **dadurch gekennzeichnet, dass** mehrere radial nach innen abragende Laschen (7) entlang wenigstens einer Umfangslinie am Umfang des Wandungsteils (1) angeordnet sind, wobei die mehreren radial nach innen abragenden Laschen (7) vorzugsweise wenigstens entlang der Umfangslinie am Umfang des Wandungsteils (1) angeordnet sind, welche der Wand oder Decke gegenüberliegend ist.

12. Brandschutzmanschette nach einem der vorhergehenden Ansprüche, **dadurch gekennzeichnet, dass** die Höhe des Formkörpers (12) größer ist als die Breite des Wandungsteils (1), so dass der Formkörper über das Wandungsteil (1) hinaussteht.

13. Brandschutzmanschette nach einem der vorhergehenden Ansprüche, **dadurch gekennzeichnet, dass** der Formkörper (12) an der der Wand oder Decke zugewandten Grundfläche einen rechtwinklig zum Formkörper (12) verlaufenden Flansch (14) aufweist.

14. Brandschutzmanschette nach einem der Ansprüche 1 bis 13, **dadurch gekennzeichnet, dass** der Formkörper (12') an der der Wand oder Decke zugewandten Grundfläche einen Flansch (14') aufweist, wobei der Flansch (14') durch eine in Umfangsrichtung der Mantelfläche des Formkörpers (12'a, 12'b) verlaufende Einkerbung (16') gebildet wird, so dass der Durchmesser (D') des Flansches (14') wenigstens dem Durchmesser des Formkörpers entspricht.

15. Brandschutzmanschette nach Anspruch 13 oder 14, **dadurch gekennzeichnet, dass** der Durchmesser des Flansches (14, 14') mindestens dem Außendurchmesser des Wandungsteils (1) entspricht und/oder die Dicke des Flansches (14, 14') so gewählt wird, dass die Brandschutzmanschette problemlos an der Wand oder Decke montiert werden kann und/oder dass die mehreren radial nach innen ragenden Laschen in die den Flansch (14') bildende Einkerbung (16') des Formkörpers (12') eingreifen.

## Claims

1. Fire protection sleeve comprising an intumescent fire protection insert (10, 10') designed as a resiliently deformable shaped body (12, 12') which completely fills a space (8) spanned by a wall part (1), a wall part (1) which surrounds the fire protection insert (10, 10') and on the inside of which the fire protection insert (10, 10') is arranged, and at least one fastening part (2) projecting radially outward in the region of at least one end face of the wall part (1), the shaped body (12, 12') being formed in two parts, **characterized in that** the two surfaces of the abutting surfaces (18, 18') of the two-part elements (12a, 12b, 12'a, 12'b) are structured.

2. Fire protection sleeve according to claim 1, **characterized in that** the two-part shaped body (12, 12') is designed as a cube, cuboid, prism or cylinder.

3. Fire protection sleeve according to claim 2, **characterized in that** the shaped body (12, 12') is designed as a cylinder and is formed by two semi-cylindrical elements (12a, 12b, 12'a, 12'b).

4. Fire protection sleeve according to any of the preceding claims, **characterized in that** the structured surfaces are formed by regularly or irregularly arranged protruding elements (30).

5. Fire protection sleeve according to claim 4, **characterized in that** the protruding elements (30) themselves have different or identical geometries and/or dimensions.

6. Fire protection sleeve according to claim 5, **characterized in that** the protruding elements (30) are pyramidal, conical, hemispherical or knob-shaped.

7. Fire protection sleeve according to any of claims 4 to 6, **characterized in that** the protruding elements (30) are of the same or different heights.

8. Fire protection sleeve according to claim 7, **characterized in that** the height of the protruding elements (30) varies in an alternating or irregular manner.

9. Fire protection sleeve according to claim 8, **characterized in that** the protruding elements (30) are between 5 mm and 50 mm tall.

10. Fire protection sleeve according to any of the preceding claims, **characterized in that** the structured surfaces of the abutting surfaces (18, 18') of the two-part elements (12a, 12b, 12'a, 12'b) are complementary to one another.

11. Fire protection sleeve according to any of the preceding claims, **characterized in that** a plurality of radially inwardly projecting tabs (7) are arranged along at least one peripheral line on the periphery of the wall part (1), the plurality of radially inwardly projecting tabs (7) preferably being arranged at least along the peripheral line on the periphery of the wall part (1), which line is opposite the wall or ceiling.

12. Fire protection sleeve according to any of the preceding claims, **characterized in that** the height of the shaped body (12) is greater than the width of the wall part (1), so that the shaped body projects beyond the wall part (1).

13. Fire protection sleeve according to any of the preceding claims, **characterized in that** the shaped body (12) has a flange (14) extending at right angles to the shaped body (12) on the main surface facing the wall or ceiling.

14. Fire protection sleeve according to any of claims 1 to 13, **characterized in that** the shaped body (12') has a flange (14') on the main surface facing the wall or ceiling, the flange (14') being formed by an indentation (16') extending in the peripheral direction of the lateral surface of the shaped body (12'a, 12'b), such that the diameter (D') of the flange (14') corresponds at least to the diameter of the shaped body.

15. Fire protection sleeve according to claim 13 or claim 14, **characterized in that** the diameter of the flange (14, 14') corresponds at least to the outer diameter of the wall part (1), and/or the thickness of the flange (14, 14') is selected such that the fire protection sleeve can be easily mounted on the wall or ceiling, and/or such that the plurality of radially inwardly projecting tabs engage in the indentation (16') of the shaped body (12') forming the flange (14').

## Revendications

1. Manchon coupe-feu comportant une garniture coupe-feu (10, 10') intumescente, laquelle est réalisée sous forme de corps formé (12, 12') déformable de manière flexible, remplissant complètement l'espace (8) entouré par la partie formant paroi (1), une partie formant paroi (1) entourant la garniture coupe-feu (10, 10'), sur le côté intérieur de laquelle la garniture coupe-feu (10, 10') est disposée, et au moins une partie de fixation (2) faisant saillie radialement vers l'extérieur dans la zone d'au moins un côté frontal de la partie formant paroi (1), dans lequel le corps formé (12, 12') est réalisé en deux parties, **caractérisé en ce que** les deux surfaces des surfaces d'impact (18, 18') des éléments (12a, 12b, 12'a, 12'b) en deux parties sont structurées.

2. Manchon coupe-feu selon la revendication 1, **caractérisé en ce que** le corps formé (12, 12') en deux parties est réalisé sous forme de cube, parallélépipède, prisme ou cylindre.

3. Manchon coupe-feu selon la revendication 2, **caractérisé en ce que** le corps formé (12, 12') est réalisé sous forme de cylindre et est formé par deux éléments (12a, 12b, 12'a, 12'b) semi-cylindriques.

4. Manchon coupe-feu selon l'une des revendications précédentes, **caractérisé en ce que** les surfaces structurées sont formées par des éléments saillants (30) disposés régulièrement ou irrégulièrement.

5. Manchon coupe-feu selon la revendication 4, **caractérisé en ce que** les éléments saillants (30) présentent eux-mêmes des géométries et/ou des dimensions différentes ou identiques.

6. Manchon coupe-feu selon la revendication 5, **caractérisé en ce que** les éléments saillants (30) sont en forme de pyramide, de cône, d'hémisphère ou de bouton.

7. Manchon coupe-feu selon l'une des revendications 4 à 6, **caractérisé en ce que** les éléments saillants (30) sont de hauteurs identiques ou différentes.

8. Manchon coupe-feu selon la revendication 7, **caractérisé en ce que** les hauteurs des éléments saillants (30) varient de manière alternée ou irrégulière.

9. Manchon coupe-feu selon la revendication 8, **caractérisé en ce que** les éléments saillants (30) ont une hauteur comprise entre 5 mm et 50 mm.

10. Manchon coupe-feu selon l'une des revendications précédentes, **caractérisé en ce que** les surfaces structurées des surfaces d'impact (18, 18') des éléments (12a, 12b, 12'a, 12'b) en deux parties sont complémentaires l'une à l'autre.

11. Manchon coupe-feu selon l'une des revendications précédentes, **caractérisé en ce que** plusieurs languettes (7) faisant saillie radialement vers l'intérieur sont disposées le long d'au moins une ligne circonférentielle sur la circonférence de la partie formant paroi (1), dans lequel les languettes (7) faisant saillie radialement vers l'intérieur sont de préférence disposées au moins le long de la ligne circonférentielle sur la circonférence de la partie formant paroi (1) qui est opposée au mur ou au plafond.

12. Manchon coupe-feu selon l'une des revendications précédentes, **caractérisé en ce que** la hauteur du corps formé (12) est supérieure à la largeur de la partie formant paroi (1), de sorte que le corps formé dépasse de la partie formant paroi (1).

13. Manchon coupe-feu selon l'une des revendications précédentes, **caractérisé en ce que** le corps formé (12) présente, sur la surface de base tournée vers le mur ou le plafond, une bride (14) s'étendant perpendiculairement au corps formé (12).

14. Manchon coupe-feu selon l'une des revendications 1 à 13, **caractérisé en ce que** le corps formé (12') présente une bride (14') sur la surface de base tournée vers le mur ou le plafond, dans lequel la bride (14') est formée par une encoche (16') s'étendant dans la direction circonférentielle de la surface formant enveloppe du corps formé (12'a, 12'b), de sorte que le diamètre (D') de la bride (14') correspond au moins au diamètre du corps formé.

15. Manchon coupe-feu selon la revendication 13 ou 14, **caractérisé en ce que** le diamètre de la bride (14, 14') correspond au moins au diamètre extérieur de la partie formant paroi (1) et/ou l'épaisseur de la bride (14, 14') est choisie de sorte que la manchette coupe-feu peut être montée sans problème sur le mur ou le plafond et/ou que les languettes faisant saillie radialement vers l'intérieur viennent en prise dans l'encoche (16') du corps formé (12'), laquelle encoche forme la bride (14').
